# FASCICULE DE BREVET EUROPEEN

(11) **EP 1 388 709 B1**
(45) Date de publication et mention de la délivrance du brevet: **01.03.2006**
(21) Numéro de dépôt: 03292001.9
(22) Date de dépôt: 21.07.2003
(51) Int. Cl.: F21V 17/00

(54) **Procédé de réalisation d'un dispositif d'éclairage ou de signalisation, et dispositif d'éclairage ou de signalisation obtenu par ce procédé**
Verfahren zur Herstellung von einer Beleuchtungs- oder Signaleinrichtung, und eine durch dieses Verfahren hergestellte Beleuchtungs- oder Signaleinrichtung
A method for manufacturing a lighting or signalling device, and a lighting or signalling device obtained by this method

(30) Priorité: 08.08.2002 FR 0210125
(43) Date de publication de la demande: 11.02.2004
(73) Titulaire: VALEO VISION, 93012 Bobigny Cédex (FR)
(72) Inventeur: Lefevre, Ghislain, 77270 Villeparisis (FR); Lery, Benoit, 75019 Paris (FR); Moret, Frédéric, 94100 Saint Maur (FR)

(56) Documents cités:
- BE-A- 508 945
- FR-A- 2 459 938
- US-A- 6 086 231

## Description

La présente invention concerne un procédé de réalisation d'un dispositif d'éclairage ou de signalisation, en particulier pour véhicule automobile, et plus particulièrement un procédé de fixation de la lentille d'un tel dispositif d'éclairage ou de signalisation.

On connaît, par exemple du document FR-A-2 696 528, un projecteur comportant un réflecteur elliptique, une source lumineuse au premier foyer du réflecteur, une pièce intermédiaire en tôle comportant une partie en forme de douille avec à l'avant un bord s'étendant radialement vers l'intérieur, une lentille comportant une bride en saillie vers l'extérieur en appui sur le bord de la pièce intermédiaire, et un jonc monté sur le bord arrière de la lentille sous précontrainte et sur des butées de la pièce intermédiaire pour appuyer la lentille sur le bord avant de la pièce intermédiaire.

Dans ce projecteur, le bord de la pièce intermédiaire se rétrécit vers l'arrière vers son extrémité libre, est monté avec son arête intérieure recevant la lentille sur la bride de celle-ci, est adjacent à la partie convexe de la lentille, et les butées pour le jonc sont formées dans des languettes librement découpées dans la paroi latérale de la pièce intermédiaire, sont orientées avec leur extrémité libre vers le réflecteur, sont pliées radialement vers l'intérieur, et s'étendent sous un angle aigu vers la face plane de la lentille.

Une telle conception présente divers inconvénients. Tout d'abord, elle nécessite une pièce supplémentaire, le jonc, venant s'interposer entre la lentille et la pièce intermédiaire, le jonc étant mis en place avant le pliage des languettes. Cette pièce supplémentaire a une influence non négligeable sur le coût du projecteur, de même que sur le temps de fabrication de ce projecteur. De plus, si ce jonc est omis, la lentille n'est pas maintenue dans sa position optimale par rapport à la source lumineuse, et le projecteur doit être mis au rebut. Enfin, lors du pliage des languettes, il est fréquent de casser la lentille, ce qui entraîne une autre source de rebuts.

On connaît également du document US-A-6 086 231, un projecteur elliptique dans lequel la lentille est maintenue sur l'élément intermédiaire par déformation de la partie circonférentielle, radialement vers l'intérieur, pour enserrer le bord de la lentille.

Les documents FR-A-2 459 938 et BE-A-508 945 décrivent des projecteurs paraboliques comportant un réflecteur et une glace, la glace étant maintenue en rabattant par thermoformage la paroi latérale d'une entretoise ou par sertissage à chaud le rebord du réflecteur contre le bord arrière de la glace.

L'application de forces radiales, c'est-à-dire perpendiculaires à l'axe optique du projecteur, est difficilement maîtrisable, de sorte qu'il arrive fréquemment que la lentille ou la glace se brise ou se fendille, le taux de rebut étant alors relativement élevé.

La présente invention se place dans ce contexte et elle a pour but de proposer un procédé de fabrication d'un dispositif d'éclairage ou de signalisation, qui ne nécessite pas de pièce supplémentaire entre la lentille et son support, qui puisse être facilement automatisé de manière à réduire le coût du dispositif d'éclairage ou de signalisation, qui soit fiable de manière à limiter les rebuts, et qui soit peu onéreux.

La présente invention a donc pour objet un procédé de réalisation d'un dispositif d'éclairage ou de signalisation, comportant une source lumineuse, un réflecteur réfléchissant les rayons lumineux émis par la source lumineuse vers une lentille de manière à former selon un axe optique un faisceau d'éclairage ou de signalisation, la lentille comportant un collet périphérique et étant maintenue par un support, le support comportant une surface annulaire d'appui limitée à sa périphérie extérieure par un rebord cylindrique, le procédé comportant l'étape consistant à déformer le rebord cylindrique en direction de la surface annulaire pour recouvrir la face plane du collet opposée à sa surface d'appui contre la surface annulaire du rebord cylindrique et le maintenir en place sans jeu et sans nécessiter de pièce supplémentaire.

Selon la présente invention, cette déformation du rebord cylindrique est effectuée en appliquant sur l'extrémité avant ou sur la face arrière du rebord cylindrique une force parallèlement à l'axe optique du dispositif d'éclairage ou de signalisation.

Selon d'autres caractéristiques avantageuses et non limitatives de l'invention :
- le support est en un matériau viscoélastique,
- la déformation du rebord cylindrique résulte d'un phénomène de fluage,
- la déformation du rebord cylindrique est effectuée en au moins trois points de ce rebord,
- la déformation du rebord cylindrique est effectuée sur la totalité de ce rebord,
- le support est constitué d'un matériau injecté et/ou moulé, et la force appliquée sur le rebord cylindrique est comprise entre 100 et 3 000 dN,
- la déformation du rebord cylindrique est effectuée par sertissage de ce rebord.

La présente invention a également pour objet un dispositif d'éclairage ou de signalisation, comportant une source lumineuse, un réflecteur réfléchissant les rayons lumineux émis par la source lumineuse vers une lentille de manière à former selon un axe optique un faisceau d'éclairage ou de signalisation, la lentille comportant un collet périphérique et étant maintenue par un support, le support comportant une surface annulaire limitée à sa périphérie extérieure par un rebord cylindrique, dans lequel la lentille est maintenue sur le support par un procédé conforme à l'une des caractéristiques ci-dessus.

D'autres buts, caractéristiques et avantages de la présente invention ressortiront clairement de la description qui va maintenant être faite d'un exemple de réalisation donné à titre non limitatif en référence aux dessins annexés sur lesquels :
- la Figure 1 représente une vue en coupe schématique d'un projecteur elliptique réalisé conformément aux enseignements de l'invention ;
- la Figure 2 représente une vue agrandie d'un détail de la Figure 1, dans une première étape du procédé selon la présente invention ;
- la Figure 3 représente une vue agrandie du même détail de la Figure 1, dans une deuxième étape du procédé selon la présente invention ;
- la Figure 4 représente une vue d'une machine permettant la mise en oeuvre du procédé selon la présente invention ;
- la Figure 5 représente un détail d'une première étape d'un deuxième mode de réalisation du procédé selon la présente invention, et
- la Figure 6 représente un détail de la deuxième étape du deuxième mode de réalisation du procédé selon la présente invention.

Préliminairement, on notera que d'une figure à l'autre les éléments identiques ou similaires sont référencés dans la mesure du possible par les mêmes signes de référence.

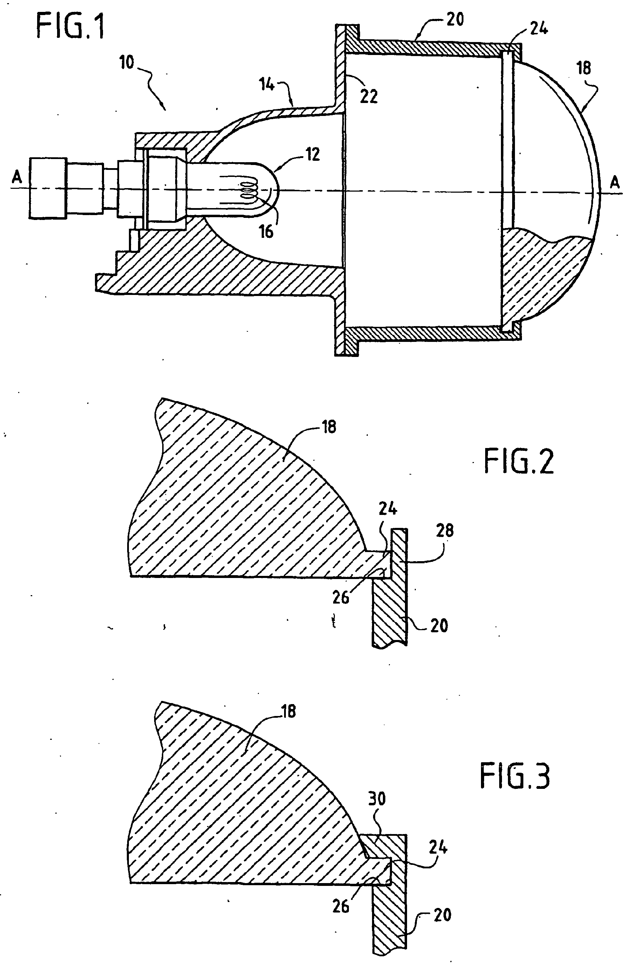

Sur la figure 1, on a représenté un projecteur 10, en particulier pour véhicule automobile, qui comporte une lampe 12 montée dans le fond d'un réflecteur 14 du type elliptique de telle sorte que la source lumineuse 16 procurée par la lampe 12 se situe au voisinage d'un premier foyer du réflecteur 14. Une telle source lumineuse 16 pourra être constituée par le filament d'une lampe à incandescence, ou par l'arc électrique d'une lampe à décharge en atmosphère gazeuse.

Dans la suite de la description, on utilisera à titre non limitatif une orientation d'arrière en avant, suivant l'axe optique A-A du projecteur 10, qui correspond au sens de propagation du faisceau lumineux émis par le dispositif. Ainsi, sur la Figure 1, l'« avant » est situé à droite de la Figure, tandis que l'« arrière » est situé à gauche.

L'axe optique A-A est généralement parallèle à l'axe longitudinal du véhicule que le projecteur 10 équipe. L'axe optique A-A est sensiblement horizontal et il peut être défini par exemple par les deux foyers du réflecteur 14.

Le projecteur 10 comporte une lentille convergente 18 qui est montée, à l'avant, sur un support qui est formé dans une partie d'ossature 20 du projecteur 10 fixée sur une surface transversale avant 22 du réflecteur 14. Le plan focal de la lentille 18 passe au voisinage du second foyer du réflecteur 14. En variante, la partie d'ossature 20 peut être réalisée d'une seule pièce avec le réflecteur 14.

L'ensemble des éléments décrits ci-dessus constitue un bloc optique de projecteur 10 qui est par exemple monté de manière classique dans un boîtier (non représenté) fermé par une glace.

De manière connue, la lentille 18 est plan convexe, et comporte à sa périphérie un collet sensiblement cylindrique 24. Dans un projecteur du genre elliptique, la surface plane de la lentille 18 est tournée vers l'arrière, tandis que la surface convexe est tournée vers l'avant. Le collet périphérique 24 prolonge la surface plane arrière, de sorte que le rayon de la surface plane arrière est inférieur au rayon de courbure de la surface avant convexe de cette lentille.

Comme on le voit sur la Figure 1, la lentille 18, ou plus exactement son collet périphérique 24, est enveloppé par le support 20, de manière à ce que la position de la lentille selon l'axe optique A-A soit définie avec précision.

Pour ce faire, comme on le voit mieux sur les Figures 2 et 3, le support 20 comporte une surface annulaire 26 limitée à sa périphérie extérieure par un rebord cylindrique 28 s'étendant vers l'avant.

La surface annulaire 26 est telle que son diamètre intérieur est inférieur à celui de la surface plane arrière de la lentille 18, tandis que le diamètre intérieur du rebord cylindrique 28 est légèrement supérieur à celui de cette surface plane arrière de la lentille 18.

Il est alors possible de disposer la lentille 18 par l'avant sur le support 20, de manière à ce que son collet périphérique 24 repose sur la surface annulaire 26 du support 20, comme on l'a représenté sur la Figure 2, et soit entouré par le rebord périphérique 28.

Conformément à la présente invention, dans cette position, il est prévu de déformer le rebord périphérique 28 de manière à ce qu'il vienne envelopper le collet 24 de la lentille 18. Pour ce faire, il est prévu d'appliquer une force sur l'extrémité avant du rebord 28, selon une direction sensiblement parallèle à l'axe optique A-A, de manière à ce qu'il vienne envelopper le collet 24 et le maintenir fermement en place. Le matériau constituant le support 20 est choisi dans le groupe des matériaux viscoélastiques de sorte que l'application d'une force ou d'une contrainte sur ce matériau provoque un phénomène de fluage, ce terme étant entendu dans la présente description comme signifiant un écoulement à froid du matériau sous l'effet d'une contrainte temporaire.

Selon ce premier mode de réalisation du procédé de la présente invention, on pourra appliquer cette force sur la totalité de l'extrémité avant du rebord 28, de manière à ce que le collet 24 de la lentille 18 soit totalement enveloppé par ce rebord ainsi déformé. Cette variante s'apparente à un sertissage du support 20 autour de la lentille 18.

Selon une variante de ce premier mode de réalisation, on pourra appliquer cette force sur le rebord 28 localement, de manière à ce que la lentille 18 ne soit maintenue qu'en des points prédéterminés du collet 24. De préférence, les points d'application de cette force seront situés de manière symétrique par rapport à l'axe optique A-A. Ils seront par exemple au nombre de trois, et espacés de 120° par rapport au centre de la face plane arrière de la lentille 18.

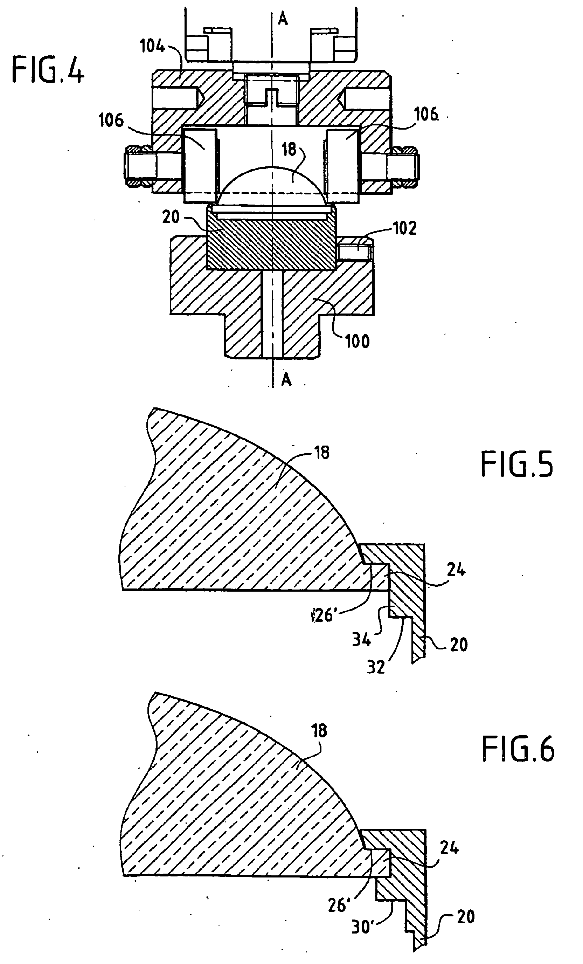

On pourra par exemple utiliser dans ce but une machine de sertissage ou de bouterollage, telle que celle qui est représentée schématiquement sur la Figure 4. Une telle machine comporte par exemple un socle 100 sur lequel est immobilisé le support 20, par exemple à l'aide de mors 102.

On dispose alors la lentille 18 sur le support 20, de manière à ce que son collet périphérique 24 repose sur la surface annulaire 26 du support 20 et soit entouré par le rebord périphérique 28, comme on l'a représenté sur la Figure 2. Ensuite, un étrier 104, pourvu d'au moins un rouleau 106, deux ayant été représentés sur la Figure 4, est approché de la lentille 18 de manière à ce que ce ou ces rouleaux viennent engager la surface avant du rebord périphérique 28.

L'étrier 104 est alors mis en rotation autour d'un axe confondu avec celui de la lentille 18, de manière à ce que le ou les rouleaux 106 roulent sur le rebord 28.

Selon le matériau viscoélastique dont est constitué le support 20, et l'épaisseur du rebord 28, l'étrier 104, et donc le ou les rouleaux 106, sont appliqués sur le rebord 28 avec une force ou une pression suffisante pour le déformer de manière à ce qu'il s'écrase par fluage et forme un épaulement ou un bourrelet 30, qui vient entourer le collet 24, pour l'envelopper ou l'emprisonner de manière définitive.

A titre d'exemple, si le support est réalisé en aluminium injecté, et si le rebord 28 a une épaisseur d'environ 3 mm, une force d'environ 800 dN pourra être appliquée sur le rebord 28, sans que le rebord ainsi déformé ne vienne briser le collet 24 ou la lentille 18.

Selon d'autres exemples de réalisation, si le support est réalisé en magnésium injecté, et si le rebord 28 a une épaisseur d'environ 4 mm, une force d'environ 600 dN pourra être appliquée sur le rebord 28 pour le déformer, et si le support est réalisé en un matériau thermoplastique injecté, par exemple du PBT (Polybutylène Téréphtalate) à 30% de fibres de verre, et si le rebord 28 a une épaisseur d'environ 5 mm, une force d'environ 300 dN pourra être appliquée sur le rebord 28 pour le déformer

On obtient alors une fixation de la lentille 18 telle qu'elle est représentée sur la Figure 3, où l'on voit que l'extrémité avant du support 20 emprisonne ou enveloppe sans jeu la lentille 18, sans qu'il soit besoin d'utiliser une pièce supplémentaire telle qu'un jonc ou un ressort, comme dans l'art antérieur.

De manière surprenante, la Demanderesse a constaté que le procédé qui vient d'être décrit est d'une remarquable fiabilité, et que le taux de rebut est notablement plus faible qu'avec les procédés de l'art antérieur.

On a représenté sur les Figures 2 à 4 un mode de réalisation dans lequel la lentille 18 est maintenue par une déformation de son support par l'avant. Il est bien entendu possible d'envisager que la lentille 18 soit maintenue par une déformation de son support par l'arrière. C'est ce que l'on a représenté sur les Figures 5 et 6.

On voit sur ces Figures que le support 20 comporte comme dans le mode de réalisation qui vient d'être décrit, une surface annulaire 26', mais qui fait cette fois face à l'arrière du support 20. La surface annulaire 26' est formée à l'arrière d'un rebord ou épaulement radial 32 de la surface interne du support 20, définissant une surface cylindrique intérieure 34.

On dispose alors la lentille 18 sur la surface annulaire 26' du support 20, de manière à ce que son collet périphérique 24 repose sur la surface annulaire 26' du support 20 et soit entouré par la surface cylindrique intérieure 34, comme on l'a représenté sur la Figure 5. Comme dans le mode de réalisation précédent, une pression est appliquée sur le rebord ou l'épaulement 32 pour le déformer de manière à ce qu'il s'écrase et vienne former un bourrelet 30' qui entoure ou enveloppe sans jeu le collet 24 de la lentille 18.

Comme dans le mode de réalisation précédent, selon une variante, on pourra appliquer cette force sur l'épaulement 32 localement, de manière à ce que la lentille 18 ne soit maintenue qu'en des points prédéterminés du collet 24. De préférence, les points d'application de cette force seront situés de manière symétrique par rapport à l'axe optique A-A. Ils seront par exemple au nombre de trois, et espacés de 120° par rapport au centre de la face plane arrière de la lentille 18.

Selon une autre variante de ce deuxième mode de réalisation du procédé de l'invention, la force nécessaire à la déformation de l'épaulement 32 pourra être appliquée sur la totalité de la face arrière de cet épaulement rebord, de manière à ce que le collet 24 de la lentille 18 soit totalement enveloppé par ce rebord ainsi déformé. On utilisera à cette fin le même type de machine de sertissage ou de bouterollage que celui qui a été décrit en relation avec la Figure 4, pour obtenir une fixation de la lentille telle qu'elle a été représentée sur la Figure 6.

On a donc bien réalisé selon la présente invention un procédé de fabrication d'un dispositif d'éclairage ou de signalisation, qui ne nécessite pas de pièce supplémentaire entre la lentille et son support, qui peut être facilement automatisé de manière à réduire le coût du dispositif d'éclairage ou de signalisation, qui est particulièrement fiable en matière de rebuts, et qui est peu onéreux.

Bien entendu, la présente invention n'est pas limitée aux modes de réalisation qui ont été décrits, mais l'homme du métier pourra au contraire lui apporter de nombreuses modifications qui rentrent dans son cadre tel que défini par les revendications. C'est ainsi que le support de lentille pourra être rapporté sur le réflecteur, ou être d'une seule pièce avec lui. De même, bien qu'ayant été décrite en relation avec la fabrication d'un projecteur du type elliptique, la présente invention est applicable à la fixation d'une glace d'un dispositif d'éclairage ou de signalisation sur le boîtier de ce dispositif.

## Revendications

1. Procédé de réalisation d'un dispositif d'éclairage ou de signalisation, comportant une source lumineuse (16), un réflecteur (14) réfléchissant les rayons lumineux émis par la source lumineuse (16) vers une lentille (18) de manière à former selon un axe optique (A-A) un faisceau d'éclairage ou de signalisation, la lentille (18) comportant un collet périphérique (24) et étant maintenue par un support (20), le support (20) comportant une surface annulaire d'appui (26, 26') limitée à sa périphérie extérieure par un rebord cylindrique (28, 34), le procédé comportant l'étape consistant à déformer le rebord cylindrique (28, 34) en direction de la surface annulaire (26, 26') pour recouvrir la face plane du collet (24) opposée à sa surface d'appui contre la surface annulaire (26, 26') du rebord cylindrique (28, 34) et le maintenir en place sans jeu et sans nécessiter de pièce supplémentaire, **caractérisé en ce que** cette déformation du rebord cylindrique (28, 34) est effectuée en appliquant sur l'extrémité avant ou sur la face arrière du rebord cylindrique (28, 34) une force parallèlement à l'axe optique (A-A) du dispositif d'éclairage ou de signalisation.

2. Procédé selon la revendication 1, **caractérisé en ce que** le support (20) est en un matériau viscoélastique.

3. Procédé selon la revendication 2, **caractérisé en ce que** la déformation du rebord cylindrique (28, 34) résulte d'un phénomène de fluage.

4. Procédé selon la revendication 1, **caractérisé en ce que** la déformation du rebord cylindrique (28, 34) est effectuée en au moins trois points de ce rebord.

5. Procédé selon la revendication 1, **caractérisé en ce que** la déformation du rebord cylindrique (28, 34) est effectuée sur la totalité de ce rebord.

6. Procédé selon la revendication 1, **caractérisé en ce que** le support (20) est constitué de matériau injecté et/ou moulé, et **en ce que** la force appliquée sur le rebord cylindrique est comprise entre 100 et 3 000 dN.

7. Procédé selon la revendication 5, **caractérisé en ce que** la déformation du rebord cylindrique (28, 34) est effectuée par sertissage de ce rebord.

## Patentansprüche

1. Verfahren zum Herstellen einer Beleuchtungs- oder Signalgebungsvorrichtung mit einer Lichtquelle (16), einem Reflektor (14), der die von der Lichtquelle (16) abgegebenen Lichtstrahlen zu einer Linse (18) derart reflektiert, dass entlang der optischen Achse (A-A) ein Beleuchtungs- oder Signalgebungslichtbündel gebildet wird, wobei die Linse (18) einen umlaufenden Kragen (24) aufweist und durch einen Halter (20) gehalten wird, wobei der Halter (20) eine ringförmige Auflagefläche (26, 26') aufweist, die an ihrem äußeren Umfang durch einen zylindrischen Rand (28, 34) begrenzt wird, wobei das Verfahren den Schritt umfasst, der in einem Verformen des zylindrischen Rands (28, 34) in Richtung der ringförmigen Fläche (26, 26') besteht, um die ebene Fläche des Kragens (24) zu bedecken, die seiner Fläche zur Anlage an der ringförmigen Fläche (26, 26') des zylindrischen Rands (28, 34) entgegengesetzt ist, und diesen ohne Spiel und ohne Erfordernis eines weiteren Teils dort zu halten, **dadurch gekennzeichnet, dass** die Verformung des zylindrischen Rands (28, 34) **dadurch** erfolgt, dass auf das vordere Ende oder die Rückseite des zylindrischen Rands (28, 34) eine Kraft ausgeübt wird, die parallel zur optischen Achse (A-A) der Beleuchtungs- oder Signalgebungsvorrichtung ist.

2. Verfahren nach Anspruch 1,
**dadurch gekennzeichnet, dass** der Halter (20) aus einem viskoelastischen Material besteht.

3. Verfahren nach Anspruch 2,
**dadurch gekennzeichnet, dass** die Verformung des zylindrischen Rands (28, 34) aus einem Kriecheffekt resultiert.

4. Verfahren nach Anspruch 1,
**dadurch gekennzeichnet, dass** die Verformung des zylindrischen Rands (28, 34) an wenigstens drei Stellen dieses Rands erfolgt.

5. Verfahren nach Anspruch 1,
**dadurch gekennzeichnet, dass** die Verformung des zylindrischen Rands (28, 34) an dem gesamten Rand erfolgt.

6. Verfahren nach Anspruch 1,
**dadurch gekennzeichnet, dass** der Halter (20) aus einem spritzgegossenen und/oder gegossenen Material gebildet ist, und die auf den zylindrischen Rand ausgeübte Kraft zwischen 100 und 3.000 dN liegt.

7. Verfahren nach Anspruch 5,
**dadurch gekennzeichnet, dass** die Verformung des zylindrischen Rands (28, 34) durch Bördeln des Rands erfolgt.

## Claims

1. A method of making a lighting or signalling apparatus that comprises a light source (16), a reflector (14) for reflecting towards a lens (18) the light rays emitted by the light source (16), in such a way as to form a lighting or signalling beam on an optical axis (A-A), the lens (18) having a peripheral collar portion (24) and being held in place by a support member (20), the support member (20) including an annular abutment surface (26, 26') which is limited at its outer periphery by a cylindrical flange element (28, 34), the method including the step that consists in deforming the cylindrical flange element (28, 34) towards the annular surface (26, 26') so that it overlies the flat face of the collar portion (24) opposed to the surface thereof that is in abutment against the annular surface (26, 26') of the cylindrical flange element (28, 34), whereby to hold the collar portion in place without any clearance and without necessitating any additional component, **characterised in that** the said deformation of the cylindrical flange element (28, 34) is effected by applying a force on the front end or the rear face of the cylindrical flange element (28, 34), in a direction parallel to the optical axis (A-A) of the lighting or signalling apparatus.

2. A method according to Claim 1, **characterised in that** the support member (20) is made of a viscoelastic material.

3. A method according to claim 2, **characterised in that** the deformation of the cylindrical flange element (28, 34) is the result of a flow process.

4. A method according to Claim 1, **characterised in that** the deformation of the cylindrical flange element (28, 34) is effected in at least three points on the said flange element.

5. A method according to Claim 1, **characterised in that** the deformation of the cylindrical flange element (28, 34) is effected over the whole of the said flange element.

6. A method according to claim 1, **characterised** ion that the support member (20) consists of injected and/or moulded material, and in that the force applied on the cylindrical flange element is in the range between 100 and 3000 dN.

7. A method according to Claim 5, **characterised in that** the deformation of the cylindrical flange element (28, 34) is effected by seaming the said flange element.
